# EUROPÄISCHE PATENTSCHRIFT

(11) **EP 0 516 947 B1**
(45) Veröffentlichungstag und Bekanntmachung des Hinweises auf die Patenterteilung: **25.10.1995**
(21) Anmeldenummer: 92106461.4
(22) Anmeldetag: 14.04.1992
(51) Int. Cl.: E04D 13/08, F16L 43/00

(54) **Dachrinnenablaufrohrbogen**
Elbow for gutter drain pipe
Coude pour descente des eaux pluviales

(30) Priorität: 06.06.1991 DE 9106966 U
(43) Veröffentlichungstag der Anmeldung: 09.12.1992
(73) Patentinhaber: Rösle Metallwarenfabrik GmbH & Co. KG, D-87616 Marktoberdorf (DE)
(72) Erfinder: Schäfer, Erhard, W-8952 Marktoberdorf (DE)
(74) Vertreter: Weickmann, Heinrich, Dipl.-Ing.

(56) Entgegenhaltungen:
- EP-A- 0 338 503
- EP-A- 0 351 487
- DE-A- 2 536 852
- DE-U- 8 429 493
- FR-A- 2 340 429

## Beschreibung

Die Erfindung betrifft einen Dachrinnenablaufrohrbogen aus Metallblech mit einem durchmessergrößeren und einem durchmesserkleineren Ende, wobei an dem durchmesserkleineren Ende ein kürzerer Einweiseabschnitt von stärkerer Konizität vorgesehen ist, an diesen Einweiseabschnitt sich ein längerer Einsteckabschnitt von gegenüber der Konizität des Einweiseabschnitts geringerer Konizität anschließt und dieser Einsteckabschnitt gegebenenfalls über eine Schwelle an einen Hauptabschnitt anschließt, wie er im Obergriff des Anspruchs 1 angegeben ist.
Ein solcher Dachrinnenablaufrohrbogen ist aus der europäischen Offenlegungsschrift 338 503 bekannt. Bei der bekannten Form geht der Einsteckabschnitt unmittelbar in die Schwelle über und zwar knickförmig. Die bekannte Ausführungsform hat sich im großen und ganzen hervorragend bewährt. Insbesondere hat es sich als sehr vorteilhaft erwiesen, den am durchmesserkleineren Ende gelegenen Endabschnitt in einen Einweiseabschnitt stärkerer Konizität und einen Einsteckabschnitt geringerer Konizität zu unterteilen, weil einerseits durch den Einweiseabschnitt ein leichtes Einfädeln in ein Anschlußrohrstück gewährleistet ist und weil andererseits Dank der geringeren Konizität des Einsteckabschnitts auch bei großen Maßabweichungen vom jeweiligen Sollmaß eine ausreichende Einstecklänge gewährleistet ist, um den Rohrbogen und ein zugehöriges Anschlußrohrstück in der jeweiligen Sollausrichtung zueinander zu positionieren. Überdies ist durch die geringe Konizität des Einsteckabschnitts die Taumelfähigkeit der aneinander anschließenden Anschlußrohrstücke sehr beschränkt, so daß eine ordnungsgemäße Relativorientierung der zusammenzusteckenden Anschlußrohrstücke an der Verbindungsstelle gewährleistet ist.

Bei der bekannten Ausführungsform ist vorgesehen, daß das Ende des Einsteckabschnitts mit dem Ende des jeweiligen Anschlußrohrstücks verlötet oder verschweißt wird. Bei toleranzmäßig günstiger Anpassung der beiden zu verbindenden Anschlußrohrstücke gelangt das Anschlußrohrstück, das auf den Einsteckabschnitt aufgeschoben wird, über den Einsteckabschnitt hinweg bis annähernd an die Schwelle. Die Löt- oder Schweißnaht kann dann zwischen Schwelle und Ende des Anschlußrohrstücks gelegt werden. Wenn jedoch innerhalb der zulässigen Toleranzen ungünstige relative Maßverhältnisse zwischen dem Dachrinnenablaufrohrbogen und dem jeweiligen Anschlußrohrstück vorliegen, so kann der Fall eintreten, daß das Anschlußrohrstück entweder nicht bis an die Schwelle herankommt oder die Schwelle teilweise überwindet. In beiden Fällen ist das Anlegen einer Löt- oder Schweißnaht erschwert. Im Falle einer Durchmessserunterbemessung des Einsteckabschnitts des Dachrinnenablaufrohrbogens oder einer Durchmesserüberbemessung des zugehörigen Endabschnitts des Anschlußrohrstücks kann überdies der Fall eintreten, daß die beiden Anschlußrohrstücke nach dem Zusammenschieben relativ zueinander eine erhebliche Taumelfähigkeit besitzen, die die Relativorientierung erschwert und auch das Anbringen einer Löt- oder Schweißnaht erschwert.

Ferner ist aus dem deutschen Gebrauchsmuster DE-G-84 29 493 eine Falleitung für die Wasserabfuhr von Gebäudedecken bekannt, bei welcher durch eine zu entwässernde Gebäudedecke eine aus mehreren Leitungsrohren bestehende Falleitung hindurchgeführt ist. Die Falleitung besteht aus mehreren geradlinig verlaufenden, ungekrümmten Leitungsrohren, weiche jeweils an ihrem oberen Ende als Einsteckmuffe ausgebildet sind, in die dann ein Einsteckrohrende des sich oben anschließenden nächsten Leitungsrohrs eingesteckt ist. Der Einsteckabschnitt umfaßt einen sich bis zu einem freien Ende des jeweiligen Leitungsrohrs erstreckenden Abdeckkörper, welcher in Richtung des freien Endes des Leitungsrohrs sich konisch verjüngend ausgebildet ist, sowie eine sich an den Abdeckkörper von dessen freien Ende entfernt anschließende kragenförmige Erweiterung. Dabei ist auch die kragenförmige Erweiterung derart ausgebildet, daß sie sich in Richtung auf das freie Ende des Leitungsrohrs zu konisch verjüngt, wobei die kragenförmige Erweiterung eine stärkere Konizität aufweist als der Abdeckkörper. Im zusammengesetzten Zustand der Falleitung liegt dann die kragenförmige Erweiterung des jeweils oberen Rohrs in einem Muffengrund der Einsteckmuffe des unteren Rohrs auf und ist darin gehalten.

Der Erfindung liegt die Aufgabe zugrunde einen Dachrinnenablaufrohrbogen anzugeben, dessen Zusammenfügen mit einem Anschlußrohrstück auch bei ungünstigen relativen Maßverhältnissen erleichtert ist, insbesondere dann, wenn eine Löt- oder Schweißnaht angebracht werden soll.

Zur Lösung dieser Aufgabe wird erfindungsgemäß vorgeschlagen, daß die Anschlagmittel einen konischen Anschlagabschnitt für das Ende des Anschlußrohrstücks mit einer gegenüber der Konizität des Einsteckabschnitts wieder vergrößerten Konizität von zwischen 3° und 10°, vorzugsweise ca. 5,7°, umfassen.

Bei der erfindungsgemäßen Ausgestaltung trifft ein Anschlußrohrstück mit einem Ende jedenfalls dann, wenn sein Durchmesser über dem Solldurchmesser liegt oder dann, wenn der große Enddurchmesser des Einsteckabschnitts unter dem Solldurchmesser liegt oder wenn beide Abweichungen zusammentreffen, gegen den Anschlagabschnitt und kann dort in verschiedenen Positionen zur Anlage kommen. Dann ist die relative Taumelfähigkeit der zusammenzufügenden Anschlußrohrstücke beschränkt und es besteht die Möglichkeit, eine Schweißnaht oder Lötnaht in günstiger Position anzubringen. Dies ist auch für den optischen Eindruck der Leitung von Vorteil.

Der Anschlagabschnitt kann relativ kurz sein und etwa eine Länge von 2 mm bis 10 mm, vorzugsweise ca. 5 mm haben.

Da die Konizität des Anschlagabschnitts zwischen 3° und 10° liegt, vorzugsweise bei 5,7°, läßt es sich einrichten, daß die Durchmesserdifferenz zwischen den beiden Enden des Anschlagabschnitts in einer Größenordnung liegt, die dem zugelassenen Relativtoleranzbereich des Anschlußdurchmessers von zugehörigen Anschlußrohrstücken entspricht.

Eine Schwelle ist bei der erfindungsgemäßen Ausführungsform nicht unbedingt erforderlich, jedoch vorteilhaft. Ist eine Schwelle vorhanden, so wird diese bevorzugt in Form eines radial auswärts ausgewölbten Wulstes gebildet, weicher von radial außen gesehen konvex ist, wobei dann der Anschlagabschnitt über einen Knick in den Wulst übergeht.

Andererseits kann der Einsteckabschnitt eine Konizität von 0,5° bis 1,0°, vorzugsweise ca. 0,76°, besitzen.

Die Länge des Anschlagabschnitts, bezogen auf die Lange des Einsteckabschnitts, beträgt etwa 10° bis 15 %, vorzugsweise ca. 13 %.

Auch die Länge des Einweiseabschnitts, bezogen auf die Länge des Einsteckabschnitts, liegt in einer Größenordnung von 10 % bis 15 %, vorzugsweise bei ca. 13 %.

Absolut gesehen kann die Länge des Einsteckabschnitts zwischen 30 mm und 45 mm, vorzugsweise bei ca. 37,5 mm liegen.

Der Wulstbereich sollte in der Regel einen Halbmesser von ca. 1,5 mm bis 3,5 mm haben, vorzugsweise ca. 2,5 mm.

Die Erfindung läßt sich unter Verwendung aller für Bedachungsmaterial üblicher Metallbleche verwirklichen, insbesondere Kupferblech, Zinkblech und verzinktes Stahlblech. Die Wandstärke des Metallbleches beträgt insbesondere im Fall von Kupfer 0,40 mm bis 0,90 mm, vorzugsweise ca. 0,60 mm bis 0,80 mm.

Der Krümmungsradius des Hauptabschnitts kann dem 1,2-fachen bis 2-fachen, vorzugsweise dem 1,35-fachen bis 1,75-fachen des Innendurchmessers des Hauptabschnitts entsprechen. Dieser Hauptabschnitt kann sich über einen Winkel von ca. 30° bis ca. 80°, vorzugsweise ca. 40° bis ca. 72° erstrecken, wobei dieses Winkelmaß jeweils auf den Krümmungsmittelpunkt des Hauptabschnitts bezogen ist.

Der Dachrinnenablaufrohrbogen ist bevorzugt aus zwei flachen Metallblechzuschnitten durch räumliche Verformung derselben zu Halbschalen und unter Verschweißung der Ränder der Halbschalen hergestellt. Dabei können die Schweißnähte bevorzugt als Stumpfschweißnähte ausgebildet sein.

Verformungstechnisch und schweißtechnisch ist es besonders günstig, wenn die Schweißnähte auf einer gedachten Zylinderfläche liegen, welche in ihrer Krümmung der Krümmungsmittellinie des Rohrbogens entspricht und auf der durch diese Krümmungslinie definierten Ebene im wesentlichen senkrecht steht.

Um das durchmessergrößere Ende zum Aufstecken auf Anschlußrohrstücke zu gewinnen, ist es möglich, daß der gekrümmte Hauptabschnitt und/oder ein daran anschließender Zylinderabschnitt zu dem durchmessergrößeren Ende hin stetig an Durchmesser zunimmt.

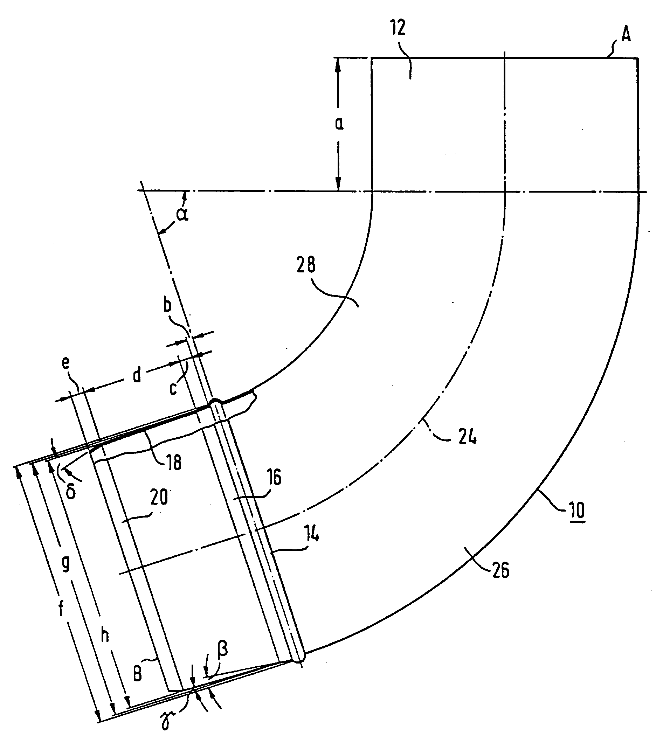

Die beiliegende Figur erläutert die Erfindung anhand eines Ausführungsbeispiels.

Der dort gezeigte Dachrinnenablaufrohrbogen hat ein Ende A mit größerem Durchmesser und ein Ende B mit kleinerem Durchmesser. Der gekrümmte Hauptabschnitt ist mit 10 bezeichnet. An diesen schließt sich ein zylindrischer Endabschnitt 12 an, der zum Aufstecken auf die Außenseite eines Anschlußstücks der Rohrleitung bestimmt ist. Zum Ende B hin weist der Hauptabschnitt 10 einen nach außen gewölbten Wulst 14 auf. An diesen Wulst 14 schließt sich ein konischer Anschlagabschnitt 16 an. An den Anschlagabschnitt 16 schließt sich ein konischer Einsteckabschnitt 18 an. An den Einsteckabschnitt 18 schließt sich ein konischer Einweiseabschnitt 20 an. Der Hauptabschnitt 10 erstreckt sich über einen Winkel α. Die Länge des Endabschnitts 12 ist mit a bezeichnet. Der Halbmesser des Wulstbereichs ist mit b bezeichnet. Die Länge des Anschlagabschnitts ist mit c bezeichnet. Die Länge des Einsteckabschnitts ist mit d bezeichnet. Die Länge des Einweiseabschnitts ist mit e bezeichnet. Der Größtdurchmesser des Anschlagabschnitts ist mit f bezeichnet. Der Kleinstdurchmesser des Anschlagabschnitts ist mit g bezeichnet. Der Kleinstdurchmesser des Einsteckabschnitts ist mit h bezeichnet. Die Konizität des Anschlagabschnitts ist mit β bezeichnet. Die Konizität des Einsteckabschnitts ist mit γ bezeichnet. Die Konizität des Einweiseabschnitts ist mit δ bezeichnet. Die den einzelnen Maßsymbolen zugeordneten Größen in mm bzw. Grad ergeben sich aus nachfolgender Tabelle:

| | |
|---|---|
| a | 35 mm |
| b | 2,5 mm |
| c | 5 mm |
| d | 37,5 mm |
| e | 5 mm |
| f | 101 mm |
| g | 100 mm |
| h | 99 mm |
| α | 72° |
| β | 5,71° |
| γ | 0,76° |
| δ | 15° |

In der Figur ist die Mittellinie des Rohrbogens mit 24 bezeichnet. Die Schweißnähte der beiden Halbschalen 26 und 28 fallen in der gewählten Ansicht mit der Mittellinie 24 zusammen, d.h., sie liegen auf einer Zylinderfläche senkrecht zur Zeichenebene, welche der Mittellinie 24 folgt.

Die Länge a des zylindrischen Endabschnitts 12 entspricht annähernd der Summe der Längen c, d und e.

## Patentansprüche

1. Dachrinnenablaufrohrbogen aus Metallblech mit einem durchmessergrößeren (A) und einem durchmesserkleineren Ende (B), wobei an dem durchmesserkleineren Ende (B) ein kürzerer Einweiseabschnitt (20) von stärkerer Konizität (δ) von 10°-20°, vorzugsweise ca. 15°, vorgesehen ist, an diesen Einweiseabschnitt (20) sich ein längerer Einsteckabschnitt (18) von gegenüber der Konizität (δ) des Einweiseabschnitts (20) wesentlich geringerer Konizität (γ) anschließt und dieser Einsteckabschnitt (18) an einen Hauptabschnitt (10) anschließt, und wobei am Übergang zwischen dem Einsteckabschnitt (18) und dem Hauptabschnitt (10) Anschlagmittel (16,14) für das Ende eines Anschlußrohrstücks vorgesehen sind,
**dadurch gekennzeichnet,**
daß die Anschlagmittel (16,14) einen konischen Anschlagabschnitt (16) für das Ende des Anschlußrohrstücks mit einer gegenüber der Konizität (γ) des Einsteckabschnitts (18) wieder vergrößerten Konizität (β) von zwischen 3° und 10°, vorzugsweise ca. 5,7°, umfassen.

2. Dachrinnenablaufrohrbogen nach Anspruch 1,
**dadurch gekennzeichnet,**
daß der Anschlagabschnitt (16) sich über eine Länge (c) von 2 mm bis 10 mm, vorzugsweise ca. 5 mm, erstreckt.

3. Dachrinnenablaufrohrbogen nach einem der Ansprüche 1 - 2,
**dadurch gekennzeichnet,**
daß die Durchmesserdifferenzen (f-g) zwischen den beiden Enden des Anschlagabschnitts (16) in einer Größenordnung liegt, die dem Toleranzbereich des Anschlußdurchmessers von zugehörigen Anschlußrohrstücken entspricht.

4. Dachrinnenablaufrohrbogen nach einem der Ansprüche 1 - 3,
dadurch gekennzeichnet,
daß zwischen dem Anschlagabschnitt (16) und dem Hauptabschnitt (10) eine Schwelle (14) vorgesehen ist.

5. Dachrinnenablaufrohrbogen nach Anspruch 4,
**dadurch gekennzeichnet,**
daß die Schwelle (14) von einem radial auswärts ausgewölbten Wulst gebildet ist, welcher von radial außen gesehen konvex ist, und daß der Anschlagabschnitt (16) über einen Knick in den Wulst (14) übergeht.

6. Dachrinnenablaufrohrbogen nach einem der Ansprüche 1 - 5,
dadurch gekennzeichnet,
daß der Einsteckabschnitt (18) eine Konizität (γ) von 0,5° bis 1,0°, vorzugsweise ca. 0,76°, besitzt.

7. Dachrinnenablaufrohrbogen nach einem der Ansprüche 1 - 6,
**dadurch gekennzeichnet,**
daß der Anschlagabschnitt (16) eine Länge (c) besitzt, welche ca. 10 % bis 15 %, vorzugsweise ca. 13 %, der Länge (d) des Einsteckabschnitts (18) beträgt.

8. Dachrinnenablaufrohrbogen nach einem der Ansprüche 1 - 7,
**dadurch gekennzeichnet,**
daß der Einweiseabschnitt (20) eine Länge (e) besitzt, welche ca. 10 % bis 15 % vorzugsweise ca. 13 %, der Länge (d) des Einsteckabschnitts (18) beträgt.

9. Dachrinnenablaufrohrbogen nach einem der Ansprüche 1 - 8,
**dadurch gekennzeichnet,**
daß der Einsteckabschnitt (18) eine Länge (d) von 30 mm bis 45 mm, vorzugsweise ca. 37,5 mm, besitzt.

10. Dachrinnenablaufrohrbogen nach einem der Ansprüche 5 - 9,
**dadurch gekennzeichnet,**
daß der Wulstbereich (14) einen Halbmesser (b) von ca. 1,5 mm bis 3,5 mm; vorzugsweise ca. 2,5 mm, besitzt.

11. Dachrinnenablaufrohrbogen nach einem der Ansprüche 1 - 10,
**dadurch gekennzeichnet,**
daß die Wandstärke des Metallblechs 0,40 mm bis 0,90 mm, vorzugsweise ca. 0,60 mm bis 0,80 mm, beträgt.

12. Dachrinnenablaufrohrbogen nach einem der Ansprüche 1 - 11,
**dadurch gkeennzeichnet,**
daß der Krümmungsradius (α) des Hauptabschnitts (10) das 1,2-fache bis 2-fache, vorzugsweise ca. das 1,35-fache bis 1,75-fache, des Innendurchmessers des Hauptabschnitts (10) beträgt.

13. Dachrinnenablaufrohrbogen nach einem der Ansprüche 1 - 12,
**dadurch gekennzeichnet,**
daß der Hauptabschnitt (10) sich über einen Winkel (α) von ca. 30° bis ca. 80°, vorzugsweise ca. 40° bis ca. 72°, erstreckt.

14. Dachrinnenablaufrohrbogen nach einem der Ansprüche 1 - 13,
**dadurch gekennzeichnet,**
daß er aus zwei flachen Metallblechzuschnitten durch räumliche Verformung derselben zu Halbschalen (26, 28) und unter Verschweißung der Ränder der Halbschalen (26, 28) hergestellt ist.

15. Dachrinnenablaufrohrbogen nach Anspruch 14,
**dadurch gekennzeichnet,**
daß die Schweißnähte als Stumpfschweißnähte ausgebildet sind.

16. Dachrinnenablaufrohrbogen nach einem der Ansprüche 14 und 15,
**dadurch gekennzeichnet,**
daß die Schweißnähte auf einer gedachten Zylinderfläche liegen, welche in ihrer Krümmung der Krümmungsmittellinie (24) des Rohrbogens entspricht und auf der durch diese Krümmungslinie definierten Ebene im wesentlichen senkrecht steht.

17. Dachrinnenablaufrohrbogen nach einem der Ansprüche 1 - 16,
**dadurch gekennzeichnet,**
daß der gekrümmte Hauptabschnitt (10) und/oder ein daran anschließender Zylinderabschnitt (12) zu dem durchmessergrößeren Ende (A) hin stetig an Durchmesser zunimmt.

## Claims

1. Eaves gutter drainage pipe bend made of sheet-metal with one end (A) of greater diameter and a second end (B) of smaller diameter, whereby a shorter guide section (20) of greater conicity (δ) of from 10° to 20°, preferably about 15°, is provided at end (B) of smaller diameter, a longer insertion section (18) of substantial lesser conicity (γ) than the conicity (δ) of the guide section (20) connects with this guide section (20), and said insertion section (18) connects with a main section (10), and whereby stopping means (16, 14) are provided on the transition between the insertion section (18) and the main section (10) for the end of a section of connecting pipe,
**characterised in that**
the stopping means (16, 14) comprise a conical stop section (16) for the end of the section of connecting pipe with a conicity (β) which is increased again in relation to the conicity (γ) of the insertion section (18) and has a value of between 3° and 10°, preferably 5.7°.

2. Eaves gutter drainage pipe bend according to claim 1
**characterised in that**
the stopping section (16) extends a length (c) of 2 mm to 10 mm, preferably about 5 mm.

3. Eaves gutter drainage pipe bend according to one of claims 1 - 2,
**characterised in that**
the differences in diameter (f-g) between the two ends of the stopping section (16) is in an order of magnitude corresponding to the permissible range of the connecting diameter of associated sections of connecting pipe.

4. Eaves gutter drainage pipe bend according to one of claims 1 - 3,
**characterised in that**
a sill (14) is provided between the stopping section (16) and the main section (10).

5. Eaves gutter drainage pipe bend according to claim 4
**characterised in that**
the sill (14) is formed by a radially outwards curved bulge which is convex viewed radially from the outside and in that the stopping section (16) passes over a bend in the bulge (14).

6. Eaves gutter drainage pipe bend according to one of claims 1 - 5
**characterised in that**
the insertion section (18) has a conicity (γ) of from 0.5° to 1.0°, preferably about 0.76°.

7. Eaves gutter drainage pipe bend according to one of claims 1 - 6
**characterised in that**
the stopping section (16) is of a length (c) which amounting to about 10% to 15%, preferably about 13 %, of the length (d) of the insertion section (18).

8. Eaves gutter drainage pipe bend according to one of claims 1 - 7
**characterised in that**
the guide section (20) is of a length (e) which amounts to about 10% to 15%, preferably about 13%, of the length (d) of the insertion section (18).

9. Eaves gutter drainage pipe bend according to one of claims 1 - 8
**characterised in that**
the insertion section (18) is of length (d) of 30 mm to 45 mm, preferably about 37.5 mm.

10. Eaves gutter drainage pipe bend according to one of claims 5 - 9
**characterised in that**
the bulge area (14) has a radius (b) of about 1.5 mm to 3.5 mm, preferably about 2.5 mm.

11. Eaves gutter drainage pipe bend according to one of claims 1 - 10,
**characterised in that**
wall thickness of the sheet-metal amounts to from 0.40 mm to 0.90 mm, preferably about 0.60 mm to 0.80 mm.

12. Eaves gutter drainage pipe bend according to one of claims 1 - 11
**characterised in that**
the radius of curvature (α) of the main section (10) is 1.2 to 2 times, preferably about 1.35 to 1.75 times, the inner diameter of the main section (10).

13. Eaves gutter drainage pipe bend according to one of claims 1 - 12
**characterised in that**
the main section (10) extends about an angle (α) of about 30° to about 80°, preferably about 40° to about 72°.

14. Eaves gutter drainage pipe bend according to one of claims 1 - 13
**characterised in that**
it is made of two flat sheet-metal shell blanks by shaping the latter into half shells (26, 28) and by welding the edges of the half shells (26, 28).

15. Eaves gutter drainage pipe bend according to Claim 14
**characterised in that**
the welding seams are formed as butt welding seams.

16. Eaves gutter drainage pipe bend according to one of claims 14 and 15
**characterised in that**
the welding seams rest on an imaginary cylinder surface which corresponds in its curvature to the middle line of curvature (24) of the pipe bend and is positioned essentially perpendicular on the plane defined by this line of curvature.

17. Eaves gutter drainage pipe bend according to one of claims 1 - 16
**characterised in that**
the curved main section (10) and/or a connecting cylinder section (12) increases constantly in diameter to end (A) of greater diameter.

## Revendications

1. Coude de décharge de gouttière en tôle métallique avec une extrémité de plus grand diamètre (A) et une extrémité de plus petit diamètre (B), dans lequel à l'extrémité de plus petit diamètre (B) est prévue une portion d'envoi (20) plus courte de plus forte conicité (δ) de 10° à 20°, de préférence de 15° environ, à cette portion d'envoi (20) se raccorde une portion d'insertion (18) plus longue de conicité (γ) sensiblement réduite par rapport à la conicité (δ) de la portion d'envoi (20) et cette portion d'insertion (18) se raccorde à une portion principale (10), et dans lequel à la transition entre la portion d'insertion (18) et la portion principale (10) sont prévus des moyens de butée (16, 14) pour l'extrémité d'une pièce tubulaire de raccord
caractérisé en ce que
les moyens de butée (16, 14) comprennent une portion de butée (16) conique pour l'extrémité de la pièce tubulaire de raccord avec une conicité (β) à nouveau agrandie par rapport à la conicité (γ) de la portion d'insertion (18), et comprise entre 3° et 10°, de préférence égale à 5,7° environ.

2. Coude de décharge de gouttière selon la revendication 1,
caractérisé en ce que
la portion de butée (16) s'étend sur une longueur (c) de 2 mm à 10 mm, de préférence sur 5 mm environ.

3. Coude de décharge de gouttière selon l'une des revendications 1 ou 2,
caractérisé en ce que
la différence de diamètre (f-g) entre les deux extrémités de la portion de butée (16) est d'un ordre de grandeur qui correspond à la plage de tolérances du diamètre de raccord de pièces tubulaires de raccord correspondantes.

4. Coude de décharge de gouttière selon l'une des revendications 1 à 3,
caractérisé en ce qu'
entre la portion de butée (16) et la portion principale (10) est prévu un seuil (14).

5. Coude de décharge de gouttière selon la revendication 4,
caractérisé en ce que
le seuil (14) est formé par un bourrelet bombé radialement vers l'extérieur, qui est convexe vu radialement de l'extérieur, et en ce que la portion de butée (16) se prolonge dans le bourrelet (14), par un coude.

6. Coude de décharge de gouttière selon l'une des revendications 1 à 5,
caractérisé en ce que
la portion d'insertion (18) possède une conicité (γ) de 0,5° à 1°, de préférence égale à 0,76° environ.

7. Coude de décharge de gouttière selon l'une des revendications 1 à 6,
caractérisé en ce que
la portion de butée (16) possède une longueur (c) qui est égale de 10 % à 15 % environ, de préférence à 13 % environ de la longueur (d) de la portion d'insertion (18).

8. Coude de décharge de gouttière selon l'une des revendications 1 à 7,
caractérisé en ce que
la portion d'envoi (20) possède une longueur (e) qui est égale de 10 % à 15 % environ, de préférence à 13 % environ de la longueur (d) de la portion d'insertion (18).

9. Coude de décharge de gouttière selon l'une des revendications 1 à 8,
caractérisé en ce que
la portion d'insertion (18) possède une longueur (d) de 30 mm à 45 mm, de préférence égale à 37,5 mm environ.

10. Coude de décharge de gouttière selon l'une des revendications 5 à 9,
ccaractérisé en ce que
la zone de bourrelet (14) possède un rayon (b) d'environ 1,5 mm à 3,5 mm, de préférence égal à 2,5 mm.

11. Coude de décharge de gouttière selon l'une des revendications 1 à 10,
caractérisé en ce que
l'épaisseur de paroi de la tôle métallique est comprise entre 0,40 mm et 0,90 mm, de préférence entre 0,60 mm et 0,80 mm environ.

12. Coude de décharge de gouttière selon l'une des revendications 1 à 11,
caractérisé en ce que
le rayon de courbure (α) de la portion principale (10) est égal de 1,2 à 2 fois, de préférence de 1,35 à 1,75 fois environ le diamètre intérieur de la portion principale (10).

13. Coude de décharge de gouttière selon l'une des revendications 1 à 12,
caractérisé en ce que
la portion principale (10) s'étend sur un angle (α) de 30° environ à 80° environ, de préférence de 40° environ à 72° environ.

14. Coude de décharge de gouttière selon l'une des revendications 1 à 13,
caractérisé en ce qu'
il est fabriqué à partir de deux flans de tôle métallique plats par déformation spatiale de ceux-ci en demi-coques (26, 28) et par soudage des bords des demi-coques (26, 28).

15. Coude de décharge de gouttière selon la revendication 14,
caractérisé en ce que
les cordons de soudure sont des cordons de soudure bout à bout.

16. Coude de décharge de gouttière selon l'une des revendications 14 ou 15,
caractérisé en ce que
les cordons de soudure se situent sur une surface cylindrique imaginaire, qui dans sa courbure correspond à la ligne médiane de courbure (24) du coude et qui est sensiblement perpendiculaire au plan défini par cette ligne de courbure.

17. Coude de décharge de gouttière selon l'une des revendications 1 à 16,
caractérisé en ce que
la portion principale (10) courbée et/ou une portion de cylindre (12) s'y raccordant augmente constamment de diamètre vers l'extrémité de plus grand diamètre (A).
